(19) Europäisches Patentamt

European Patent Office

Office européen des brevets

(11) **EP 0 661 004 B1**

(12) **EUROPEAN PATENT SPECIFICATION**

(45) Date of publication and mention
of the grant of the patent:
**30.10.2002   Bulletin 2002/44**

(51) Int Cl.[7]: **A23K 1/16**

(21) Application number: **94120861.3**

(22) Date of filing: **28.12.1994**

(54) **Nourishing composition for animals**

Tierfutterzusammensetzung

Composition alimentaire pour les animaux

(84) Designated Contracting States:
**AT BE CH DE DK ES FR GB GR IE IT LI LU MC NL PT SE**

(30) Priority: **28.12.1993  JP 33422393**

(43) Date of publication of application:
**05.07.1995  Bulletin 1995/27**

(73) Proprietor: **KYOWA HAKKO KOGYO CO., Ltd.
Chiyoda-ku, Tokyo 100 (JP)**

(72) Inventors:
• **Nakasugi, Shigeru
  Setagaya-ku, Tokyo (JP)**
• **Shimada, Kenjiro
  Tsuchiura-shi, Ibaraki (JP)**
• **Morishita, Koji
  Tsuchiura-shi, Ibaraki (JP)**

(74) Representative: **Kinzebach, Werner, Dr. et al
Patentanwälte
Reitstötter, Kinzebach und Partner
Postfach 86 06 49
81633 München (DE)**

(56) References cited:
EP-A- 0 090 356          EP-A- 0 130 746
EP-A- 0 139 055          EP-A- 0 218 324
EP-A- 0 540 421

• DATABASE WPI Week 8624, Derwent
  Publications Ltd., London, GB; AN 86-152427 &
  JP-A-61 085 151 (NIPPON HAIGO-SHIRYO ET
  AL.) 30 April 1986
• FOOD SCIENCE AND TECHNOLOGY
  ABSTRACTS AN 78(01):G0014 FSTA
  International Food Information Service
  Berkshire, Reading, GB & Food Engineering
  International, vol. 2, no. 6, 1977, pages 38-43. *
  abstract *
• DATABASE WPI Week 8049, Derwent
  Publications Ltd., London, GB; AN 80-87197C &
  JP-A-55 135 555 (SHIBATA K.) 23 October 1980
• DATABASE WPI Week 9047, Derwent
  Publications Ltd., London, GB; AN 90-352470 &
  JP-A-2 255 047 (NIPPON KAYAKU KK) 15
  October 1990
• BELITZ ET AL.: "Lehrbuch der
  Lebensmittelchemie", 01. January 1985,
  SPRINGER VERLAG, BERLIN
• FALBE ET AL.: "Römpp Chemie Lexikon", 01.
  January 1990, GEORG THIEME VERLAG,
  STUTTGART

**Description**

FIELD OF THE INVENTION

This invention relates to a nourishing composition for animals which is useful in improving the nutritional conditions of animals when given together with drinking water.

BACKGROUND OF THE INVENTION

In summer, domestic animals generally drink much water but show decreased appetite, which causes various problems, for example, in the case of pig etc., stagnation in body weight gain and reduction of mating performance, in the case of broiler etc., stagnation in body weight gain, in the case of layer etc., reduction of egg laying performance, decrease in egg shell strength and increase in the ratio of soft/broken shell eggs.

Further, problems such as stagnation in body weight gain may occur at the time of the shipment of broilers, the transfer of large layer chicks, the debeaking of layers, forced moulting of layers, the change of the feed for layers or broilers, the first feeding of the new-born layers or broilers, vaccination of layers or broilers, farrowing and weaning of piglings and the shipment of mother pigs.

To prevent these problems, attempts have been made to add nutritional components such as amino acids to feeds to thereby improve the nutritional conditions of domestic animals.

Even if nutritional components such as amino acids are added to feeds, however, the decreased appetite makes it impossible to achieve the desired effects.

In addition, feed remaining in the digestive organs of pork type pigs, broilers etc. at dressing contravenes the Food Hygiene Law. It is therefore necessary to omit feed and give only water to domestic animals from the day before shipment.

Accordingly, it is expected that when nutritional components including amino acids are added to drinking water, then the nutritional conditions of domestic animals can be maintained or improved even though they show decreased appetite or are fasting.

JP-A-2-255047 has proposed a method for improving the amino acid uptake of an animal by orally administering a liquid composition comprising amino acids together with other nutritional components, for example, carbohydrates, vitamins, minerals and enzymes (the term "JP-A" as used herein means an "unexamined published Japanese patent application").

However, the composition disclosed in the above publication suffers from several disadvantages, for example that a sufficient amount of amino acids can be hardly dissolved in the composition and that glucose, which is one of the carbohydrates employed as an additive, undergoes aminocarbonylation with the amino acids in an aqueous solution resulting in browning or solidification of the feed aqueous solution.

EP 0 090 356 discloses a method of stabilising a solid composition containing a monosaccharide or/and a disaccharide and an amino acid by incorporating a polysaccharide with a water content of not more than 3%.

EP 0 540 421 relates to indigestible dextrins prepared from potato starch.

SUMMARY OF THE INVENTION

The present invention aims at providing a nourishing composition for animals containing (1) dextrin and (2) amino acids where the amino acids are dissolved in a sufficient amount and never undergo aminocarbonylation even though the composition is formulated into an aqueous solution.

Accordingly, the present invention relates to a nourishing composition for animals which comprises an aqueous solution containing (1) dextrin and (2) at least one amino acid.

BRIEF DESCRIPTION OF THE DRAWING

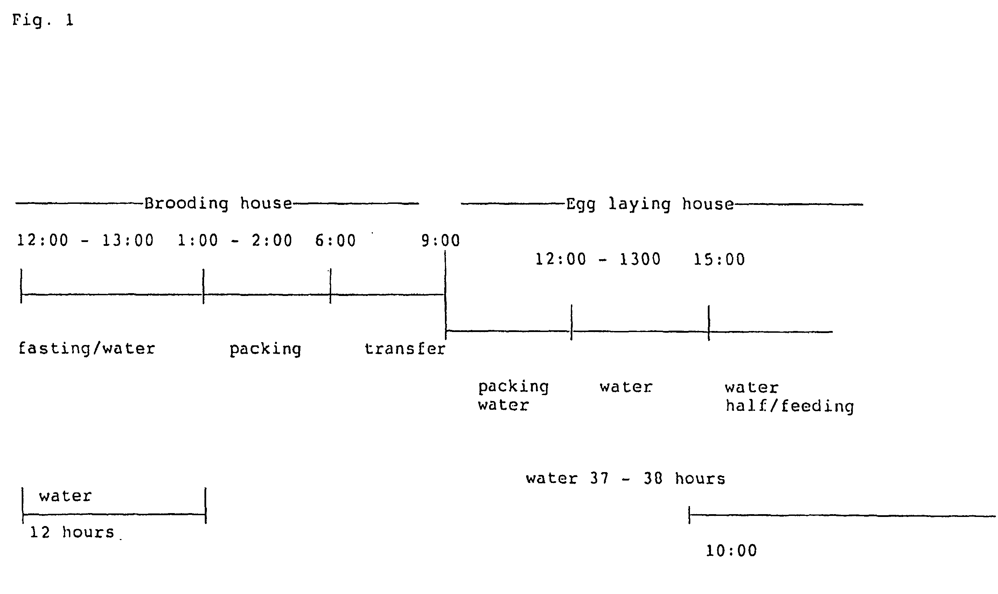

Fig. 1 shows an operation schedule for transferring large layer chicks.

DETAILED DESCRIPTION OF THE INVENTION

As the dextrin, those having a degree of polymerization ranging from 3 to 30, preferably from 5 to 25, may be used.

The amino acid (or acids) used in the present invention is not particularly restricted, so long as it is one required by animals. It is particularly preferable to use essential amino acids such as lysine, methionine, tryptophan, threonine, alanine, glycine and glutamic acid.

The amino acid content in the nourishing composition for animals according to the present invention ranges from 0.001 to 5.0 % by weight, preferably from 0.003 to 2.0 % by weight (dry basis). For example, the contents of lysine, methionine, tryptophan, threonine, glutamic acid, glycine and alanine preferably range respectively from 0.002 to 2.0 % by weight, from 0.003 to 0.8 % by weight, from 0.001 to 0.3 % by weight, from 0.001 to 0.4 % by weight, from 0.005 to 2.0 % by weight, from 0.005 to 2.0 % by weight and from 0.005 to 2.0 % by weight. The content of dextrin or sugar alcohols ranges from 0.0005 to 10.0 % by weight, preferably 0.001 to 0.8 % by weight.

The nourishing composition for animals of the present invention may contain additional components such as dissolution aids, dispersing agents, stabilizers, preservatives, antibiotics and antioxidants. Also, it may contain proteinous materials such as soluble soybean protein, soluble fish protein, soluble gelatin and defatted milk powder, organic acids such as citric acid, malic acid and succinic acid, vitamins, minerals, ethyl alcohol, colorants and perfumes. It is preferable to use organic acids from among these additives, since they exhibit a buffering action in the solution, improve the appetite and play a role as a metabolite in the TCA cycle *in vivo* so as to serve as an energy source.

The nourishing composition for animals according to the present invention can be produced by mixing amino acids with dextrin, and then dissolving the obtained mixture in water or an aqueous solution containing an organic solvent, which exerts no undesirable effects on animals, such as ethyl alcohol. The particle size (diameter) of the amino acids to be used in the formulation ranges from 1.0 to 500 µm. For example, the particle sizes of lysine, methionine, tryptophan, threonine, glutamic acid, glycine and alanine preferably range respectively from 1.0 to 500 µm, from 1.0 to 200 µm, from 1.0 to 200 µm, from 1.0 to 500 µm, from 1.0 to 500 µm, from 1.0 to 500 µm and from 1.0 to 500 µm. It is preferable that the dissolution or suspending is carried out immediately before use.

The nourishing composition for animals of the present invention may be given to, for example, poultry such as layer and broiler, monogastric animals such as pig and ruminants such as cattle and sheep. The nourishing composition for animals of the present invention may be given to the animals *ad libitum*. Alternately, it may be orally given to them by force. The dose may range from 10 to 1,000 mg/kg/day in terms of amino acids and from 5 to 1,000 mg/kg/day in terms of dextrin or sugar alcohols. The compositions of the invention may be given as a single or divided administration.

Although the nourishing composition for animals according to the present invention is in the form of an aqueous solution, it never causes aminocarbonylation between sugars and amino acids and the aqueous solution undergoes neither browning nor solidification. Thus the nourishing composition for animals of the present invention makes it possible to increase amino acid uptake thus improving the nutritional conditions of animals.

The nourishing composition for animals of the present invention is useful in, for example, the shipment of broilers, the transfer of large layer chicks, the debeaking of layers, forced moulting of layers, feeding layers or broilers during the summer season, the change of the feed for layers or broilers, the first feeding of the new-born layers or broilers, vaccination of layers or broilers, farrowing, weaning of piglings, weight-maintenance of mother pigs at the shipment, prevention of body weight loss and reduction in mortality.

Next, working examples and test examples of the present invention will be given.

Lysine, tryptophan, threonine and glutamic acid employed in the following examples were all L-compounds, while methionine and alanine employed therein were all DL-compounds. As the amino acids to be used in the present invention, mention may be made of D-form, L-form and DL-form.

Compositions 24, 25, 27-31 are not embodiments of the invention according to the present claims.

EXAMPLE 1

Lysine, methionine, threonine, tryptophan, glycine, dextrin (degree of polymerization: 15.1; NSD 300 manufactured by Nippon Shiryo Kogyo Co.) and citric acid were mixed together at each ratio as specified in Table 1 and the resulting mixture was dissolved in 20 1 of water. The obtained solution was diluted 15-fold with the use of a proportional liquid dispenser (Dosatron, a product of Dosatron International). Thus nourishing compositions 1, 2 and 3 for animals were obtained.

Table 1

| Component | Composition 1 (g) | Composition 2 (g) | Composition 3 (g) |
|-----------|-------------------|-------------------|-------------------|
| lysine | 40 | 80 | 160 |
| methionine | 15 | 30 | 60 |
| threonine | 20 | 40 | 80 |
| tryptophan | 15 | 30 | 60 |
| glycine | 100 | 200 | 400 |
| dextrin | 300 | 610 | 1230 |

Table 1   (continued)

| Component | Composition 1 (g) | Composition 2 (g) | Composition 3 (g) |
|---|---|---|---|
| citric acid | 10 | 10 | 10 |
| total | 500 | 1000 | 2000 |

EXAMPLE 2

Lysine, methionine, threonine, tryptophan, dextrin (degree of polymerization: 15.1; NSD 300 manufactured by Nippon Shiryo Kogyo Co.), citric acid and vitamins were mixed together at each ratio as specified in Table 2 and the resulting mixture was dissolved in-20 1 of water. The obtained solution was diluted 15-fold with the use of a proportional liquid dispenser (Dosatron, a product of Dosatron International). Thus nourishing compositions 4, 5 and 6 for animals were obtained. The vitamins used herein was a composition prepared by mixing the vitamins as specified in Table 3 and adding dextrin thereto in such a manner as to give a total amount of 10 g.

Table 2

| Component | Composition 4 (g) | Composition 5 (g) | Composition 6 (g) |
|---|---|---|---|
| lysine | 10 | 20 | 40 |
| methionine | 6 | 15 | 25 |
| threonine | 3 | 5 | 10 |
| tryptophan | 1 | 3 | 5 |
| dextrin | 10 | 17 | 20 |
| citric acid | 5 | 10 | 10 |
| vitamin | 10 | 10 | 10 |
| total | 45 | 80 | 120 |

Table 3

| Compound | Content (mg) | Compound | Content (mg) |
|---|---|---|---|
| thiamine | 50.0 | biotin | 2.0 |
| riboflavin | 100.0 | choline | 9000.0 |
| pantothenic acid | 200.0 | folic acid | 10.0 |
| nicotinic acid | 200.0 | vitamin $B_{12}$ | 0.2 |
| vitamin $B_6$ | 40.0 | linoleic acid | 20.0 |

EXAMPLE 3

Lysine, methionine, threonine, tryptophan, dextrin (degree of polymerization: 15.1; NSD 300 manufactured by Nippon Shiryo Kogyo Co.), citric acid and vitamins were mixed together at each ratio as specified in Table 4 and the resulting mixture was dissolved in 30 l of water. The obtained solution was diluted 10-fold with the use of a proportional liquid dispenser (Dosatron, a product of Dosatron International). Thus nourishing compositions 7 and 8 for animals were obtained. The vitamins used herein was a composition prepared by mixing the vitamins as specified in Table 5 and adding dextrin thereto to give a total amount of 10 g.

Table 4

| Component | Composition 7 (g) | Composition 8 (g) |
|---|---|---|
| lysine | 10 | 30 |
| methionine | 30 | 65 |
| threonine | 5 | 10 |
| tryptophan | 10 | 30 |
| dextrin | 35 | 45 |
| citric acid | 10 | 10 |
| vitamin | 10 | 10 |

Table 4   (continued)

| Component | Composition 7 (g) | Composition 8 (g) |
|---|---|---|
| total | 120 | 200 |

Table 5

| Compound | Content (mg) | Compound | Content (mg) |
|---|---|---|---|
| thiamine | 80.0 | biotin | 10.0 |
| riboflavin | 220.0 | choline | 8000.0 |
| pantothenic acid | 220.0 | folic acid | 2.5 |
| nicotinic acid | 1000.0 | vitamin $B_{12}$ | 0.3 |
| vitamin $B_6$ | 300.0 | linoleic acid | 10.0 |

EXAMPLE 4

Lysine, methionine, threonine, tryptophan, glycine, dextrin (degree of polymerization: 15.1; NSD 300 manufactured by Nippon Shiryo Kogyo Co.), citric acid and vitamins were mixed together at each ratio as specified in Table 6 and the resulting mixture was dissolved in 20 l of water. The obtained solution was diluted 10-fold with the use of a proportional liquid dispenser (Dosatron, a product of Dosatron International). Thus nourishing compositions 9 to 11 for animals were obtained. The vitamins used herein was prepared by mixing the vitamins as specified in Table 7 and adding dextrin thereto to give a total amount of 10 g.

Table 6

| Component | Composition 9 (g) | Composition 10 (g) | Composition 11 (g) |
|---|---|---|---|
| lysine | 15 | 30 | 60 |
| methionine | 10 | 20 | 40 |
| threonine | 10 | 20 | 40 |
| tryptophan | 3 | 5 | 10 |
| glycine | 40 | 75 | 150 |
| dextrin | 102 | 230 | 480 |
| citric acid | 10 | 10 | 10 |
| vitamin | 10 | 10 | 10 |
| total | 200 | 400 | 800 |

Table 7

| Compound | Content (mg) | Compound | Content (mg) |
|---|---|---|---|
| thiamine | 260.0 | biotin | 20.0 |
| riboflavin | 360.0 | choline | 4000.0 |
| pantothenic acid | 2000.0 | folic acid | 50.0 |
| nicotinic acid | 2200.0 | vitamin $B_{12}$ | 1.0 |
| vitamin $B_6$ | 600.0 | linoleic acid | 160.0 |

EXAMPLE 5

Lysine, methionine, threonine, tryptophan, glycine, dextrin (degree of polymerization: 15.1; NSD 300 manufactured by Nippon Shiryo Kogyo Co.), citric acid and vitamins were mixed together at each ratio as specified in Table 8 and the resulting mixture was dissolved in 20 l of water. The obtained solution was diluted 10-fold with the use of a proportional liquid dispenser (Dosatron, a product of Dosatron International). Thus nourishing compositions 12 to 14 for animals were obtained. The vitamins used herein was prepared by mixing the vitamins as specified in Table 9 and adding dextrin thereto to give a total amount of 10 g.

Table 8

| Component | Composition 12 (g) | Composition 13 (g) | Composition 14 (g) |
|---|---|---|---|
| lysine | 30 | 60 | 120 |
| methionine | 20 | 40 | 80 |
| threonine | 20 | 40 | 80 |
| tryptophan | 5 | 10 | 20 |
| glycine | 75 | 150 | 300 |
| dextrin | 230 | 480 | 980 |
| citric acid | 10 | 10 | 10 |
| vitamin | 10 | 10 | 10 |
| total | 400 | 800 | 1600 |

Table 9

| Compound | Content (mg) | Compound | Content (mg) |
|---|---|---|---|
| thiamine | 80.0 | biotin | 10.0 |
| riboflavin | 220.0 | choline | 7500.0 |
| pantothenic acid | 220.0 | folic acid | 2.5 |
| nicotinic acid | 1000.0 | vitamin $B_{12}$ | 0.3 |
| vitamin $B_6$ | 300.0 | linoleic acid | 100.0 |

EXAMPLE 6

Lysine, methionine, threonine, tryptophan, glycine, dextrin (degree of polymerization: 15.1; NSD 300 manufactured by Nippon Shiryo Kogyo Co.), citric acid and vitamins were mixed together at each ratio as specified in Table 10 and the resulting mixture was dissolved in 20 l of water. Thus, nourishing compositions 15 to 17 for animals were obtained. The vitamins used herein was prepared by mixing the vitamins as specified in Table 11 and adding dextrin thereto to give a total amount of 2 g.

Table 10

| Component | Composition 15 (g) | Composition 16 (g) | Composition 17 (g) |
|---|---|---|---|
| lysine | 4 | 8 | 16 |
| methionine | 2 | 4 | 8 |
| threonine | 3 | 6 | 12 |
| tryptophan | 1 | 2 | 4 |
| glycine | 2 | 4 | 8 |
| dextrin | 34 | 72 | 148 |
| citric acid | 2 | 2 | 2 |
| vitamin | 2 | 2 | 2 |
| total | 50 | 100 | 200 |

Table 11

| Compound | Content (mg) | Compound | Content (mg) |
|---|---|---|---|
| thiamine | 1.0 | biotin | 0.2 |
| riboflavin | 3.75 | choline | 1250.0 |
| pantothenic acid | 12.0 | folic acid | 0.3 |
| nicotinic acid | 10.0 | vitamin $B_{12}$ | 0.02 |
| vitamin $B_6$ | 1.0 | | |

EXAMPLE 7

Lysine, methionine, threonine, tryptophan, dextrin (degree of polymerization: 15.1; NSD 300 manufactured by Nippon Shiryo Kogyo Co.), citric acid and vitamins were mixed together at each ratio as specified in Table 12 and the resulting mixture was dissolved in 20 l of water. The obtained solution was diluted 2-fold with the use of a proportional liquid dispenser (Dosatron, a product of Dosatron International). Thus nourishing compositions 18 to 20 for animals were obtained. The vitamins used herein was prepared by mixing the vitamins as specified in Table 13 and adding dextrin thereto to give a total amount of 1 g.

Table 12

| Component | Composition 18 (g) | Composition 19 (g) | Composition 20 (g) |
|---|---|---|---|
| lysine | 4.5 | 9.0 | 18.0 |
| methionine | 2.2 | 4.5 | 9.0 |
| threonine | 2.6 | 5.2 | 10.5 |
| tryptophan | 0.8 | 1.6 | 3.2 |
| dextrin | 2.9 | 2.7 | 7.3 |
| citric acid | 1.0 | 1.0 | 1.0 |
| vitamin | 1.0 | 1.0 | 1.0 |
| total | 15.0 | 25.0 | 50.0 |

Table 13

| Compound | Content (mg) | Compound | Content (mg) |
|---|---|---|---|
| thiamine | 10.5 | biotin | 0.5 |
| riboflavin | 31.6 | choline | 4200.0 |
| pantothenic acid | 95.0 | folic acid | 3.2 |
| nicotinic acid | 130.2 | vitamin $B_{12}$ | 0.2 |
| vitamin $B_6$ | 15.8 | | |

EXAMPLE 8

Lysine, methionine, threonine, tryptophan, glycine, dextrin (degree of polymerization: 15.1; NSD 300 manufactured by Nippon Shiryo Kogyo Co.) and citric acid were mixed together at each ratio as specified in Table 14 and the resulting mixture was dissolved in 10 l of water. The obtained solution was diluted 10-fold with the use of a proportional liquid dispenser (Dosatron, a product of Dosatron International). Thus nourishing compositions 21 to 23 for animals were obtained.

Table 14

| Component | Composition 21 (g) | Composition 22 (g) | Composition 23 (g) |
|---|---|---|---|
| lysine | 10 | 13 | 15 |
| methionine | 5 | 6.5 | 8 |
| threonine | 7 | 8 | 9 |
| tryptophan | 2 | 2.5 | 3 |
| glycine | 20 | 25 | 30 |
| dextrin | 146 | 235 | 325 |
| citric acid | 10 | 10 | 10 |
| total | 200 | 300 | 400 |

EXAMPLE 9

Lysine, methionine, threonine, tryptophan, glycine, glucose, fructose, dextrin (degree of polymerization: 15.1; NSD 300 manufactured by Nippon Shiryo Kogyo Co.) and citric acid were mixed together at each ratio as specified in Table 15 and the resulting mixture was dissolved in 1 l of water. Thus nourishing compositions 24 to 27 for animals were obtained.

Table 15

| Component | Composition 24 (g) | Composition 25 (g) | Composition 26 (g) | Composition 27 (g) |
|---|---|---|---|---|
| lysine | 0.16 | 0.16 | 0.16 | 0.16 |
| methionine | 0.06 | 0.06 | 0.06 | 0.06 |
| threonine | 0.06 | 0.06 | 0.06 | 0.06 |
| tryptophan | 0.11 | 0.11 | 0.11 | 0.11 |
| glycine | 0.10 | 0.10 | 0.10 | 0.10 |
| glucose | 0.50 | - | - | 0.40 |
| fructose | - | 0.50 | - | - |
| dextrin | - | - | 0.50 | - |
| citric acid | 0.01 | 0.01 | 0.01 | 0.01 |

EXAMPLE 10

Lysine, methionine, threonine, tryptophan, sorbitol citric acid and vitamins were mixed together at each ratio as specified in Table 16 and the resulting mixture was dissolved in 20 l of water. The obtained solution was diluted 15-fold with the use of a proportional liquid dispenser (Dosatron, a product of Dosatron International). Thus nourishing compositions 28 and 29 for animals were obtained. The vitamins used herein was a composition prepared by mixing the vitamins as specified in Table 3 above and adding sorbitol thereto in such a manner as to give a total amount of 10 g.

Table 16

| Component | Composition 28 (g) | Composition 29 (g) |
|---|---|---|
| lysine | 30 | 60 |
| methionine | 15 | 30 |
| threonine | 15 | 30 |
| tryptophan | 5 | 10 |
| sorbitol | 10 | 20 |
| citric acid | 10 | 20 |
| vitamin | 5 | 10 |
| total | 90 | 180 |

EXAMPLE 11

Lysine, methionine, threonine, tryptophan, sorbitol, citric acid and vitamins were mixed together at each ratio as specified in Table 17 and the resulting mixture was dissolved in 10 l of water. The obtained solution was diluted 10-fold with the use of a proportional liquid dispenser (Dosatron, a product of Dosatron International). Thus nourishing compositions 30 and 31 for animals were obtained. The vitamins used herein was a composition prepared by mixing the vitamins as specified in Table 18 and adding sorbitol thereto to give a total amount of 10 g.

Table 17

| Component | Composition 30 (g) | Composition 31 (g) |
|---|---|---|
| lysine | 10 | 20 |
| methionine | 5 | 10 |
| threonine | 5 | 10 |
| tryptophan | 2.5 | 5 |
| sorbitol | 12.5 | 25 |
| citric acid | 2.5 | 5 |
| vitamin | 2.5 | 5 |
| total | 40 | 80 |

Table 18

| Compound | Content (mg) | Compound | Content (mg) |
|---|---|---|---|
| thiamine | 15.0 | biotin | 0.5 |
| riboflavin | 25.0 | choline | 1500.0 |
| pantothenic acid | 50.0 | folic acid | 2.5 |
| nicotinic acid | 50.0 | vitamin $B_{12}$ | 0.1 |
| vitamin $B_6$ | 10.0 | linoleic acid | 5.0 |

EXAMPLE 12

Lysine, methionine, threonine, tryptophan, dextrin (degree of polymerization: 15.1; NSD 300 manufactured by Nippon Shiryo Kogyo Co.) citric acid and vitamins were mixed together at each ratio as specified in Table 19 and the resulting mixture was dissolved in 30 l of water. The obtained solution was diluted 10-fold with the use of a proportional liquid dispenser (Dosatron, a product of Dosatron International). Thus nourishing compositions 32 and 33 for animals were obtained. The vitamins used herein was prepared by mixing the vitamins as specified in Table 5 above and adding dextrin thereto to give a total amount of 10 g.

Table 19

| Component | Composition 32 (g) | Composition 33 (g) |
|---|---|---|
| lysine | 20 | 30 |
| methionine | 30 | 65 |
| threonine | 5 | 10 |
| tryptophan | 10 | 30 |
| dextrin | 35 | 45 |
| citric acid | 10 | 10 |
| vitamin | 10 | 10 |
| total | 120 | 200 |

EXAMPLE 13

Lysine, methionine, threonine, tryptophan, dextrin (degree of polymerization: 15.1; NSD 300 manufactured by Nippon Shiryo Kogyo Co.), citric acid and vitamins were mixed together at each ratio as specified in Table 20 and the resulting mixture was dissolved in 20 l of water. The obtained solution was diluted 15-fold with the use of a proportional liquid dispenser (Dosatron, a product of Dosatron International). Thus nourishing composition 34 for animals were obtained. The vitamins used herein was prepared by mixing the vitamins as specified in Table 3 above and adding dextrin thereto to give a total amount of 10 g.

Table 20

| Component | Composition 34 (g) |
|---|---|
| lysine | 60 |
| methionine | 30 |
| threonine | 30 |
| tryptophan | 10 |
| dextrin | 20 |
| citric acid | 20 |
| vitamin | 10 |
| total | 180 |

EXAMPLE 14

Lysine, methionine, threonine, tryptophan, dextrin (degree of polymerization: 15.1; NSD 300 manufactured by Nippon Shiryo Kogyo Co.), citric acid and vitamins were mixed together at each ratio as specified in Table 21 and the resulting mixture was dissolved in 20 l of water. The obtained solution was diluted 10-fold with the use of a proportional liquid dispenser (Dosatron, a product of Dosatron International). Thus nourishing composition 35 for animals was obtained. The vitamins used herein was prepared by mixing the vitamins as specified in Table 22 and adding dextrin thereto to give a total amount of 10 g.

Table 21

| Component | Composition 35 (g) |
|---|---|
| lysine | 60 |
| methionine | 40 |
| threonine | 40 |
| tryptophan | 10 |
| dextrin | 20 |
| citric acid | 10 |
| vitamin | 10 |
| total | 200 |

Table 22

| Compound | Content (mg) | Compound | Content (mg) |
|---|---|---|---|
| thiamine | 260.0 | biotin | 20.0 |
| riboflavin | 360.0 | choline | 9000.0 |
| pantothenic acid | 2000.0 | folic acid | 50.0 |
| nicotinic acid | 2200.0 | vitamin $B_{12}$ | 1.0 |
| vitamin $B_6$ | 600.0 | linoleic acid | 160.0 |

TEST EXAMPLE 1

Broilers aged 56 days were divided into 4 groups each having 1,000 birds and fasted for 15 hours and 30 minutes before the shipment. During the fasting period, the nourishing compositions 1 to 3 obtained in Example 1 and water (as a control) were given respectively to the groups.

The average body weight and the number of dead birds of each group were measured at the initiation of the test and after the completion thereof. Thus the body weight loss and mortality were calculated. Table 23 shows the results.

Table 23

| | Composition 1 | Composition 2 | Composition 3 | Control |
|---|---|---|---|---|
| Body weight before test (g) | 2958 | 2983 | 2978 | 2977 |
| Body weight after test (g) | 2880 | 2926 | 2940 | 2882 |
| Body weight loss (g) | 78 | 57 | 38 | 95 |
| Body weight loss (%) | 2.63 | 1.91 | 1.27 | 3.19 |
| Mortality (%) | 2.0 | 1.2 | 0.8 | 3.2 |

As Table 23 shows, the nourishing compositions 1 to 3 for animals according to the present invention each suppressed the body weight loss and lowered the mortality, compared with the control.

TEST EXAMPLE 2

When the temperature was high in the summer season, broilers aged 35 days were divided into 4 groups each having 1,000 birds and fed with a common feed for 35 days. During this period, the nourishing compositions 4 to 6 obtained in Example 2 and water (as a control) were given to the birds.

The average body weight and the number of missing (dead) birds were measured at the initiation of the test and after the completion thereof. Thus the raising rate [(number of birds before test - number of missing birds)/number of birds before test], the feed conversion rate (feed intake/body weight gain), the meat productivity [(average body weight/feed conversion rate) x 100] and the broiler production score (PS) were calculated. PS was calculated in accordance with the following formula.

$$PS = \frac{\text{body weight after test x raising rate}}{\text{feed conversion rate x test period (days)}} \times 100.$$

Table 24 shows the results.

Table 24

|  | Composition 4 | Composition 5 | Composition 6 | Control |
|---|---|---|---|---|
| No. of missing birds | 15 | 10 | 5 | 20 |
| Raising rate (Z) | 98.5 | 99.0 | 99.5 | 98.0 |
| Body weight before test (g) | 663 | 665 | 638 | 668 |
| Body weight after test (g) | 2869 | 2892 | 2955 | 2837 |
| Body weight gain (g) | 2206 | 2227 | 2317 | 2169 |
| Daily body weight gain (g) | 63.0 | 63.6 | 66.2 | 62.0 |
| Feed conversion rate (Z) | 2.34 | 2.30 | 2.29 | 2.38 |
| Meat productivity (%) | 123 | 126 | 129 | 119 |
| PS | 215 | 222 | 229 | 209 |

As Table 24 shows, the nourishing compositions 4 to 6 for animals according to the present invention each decreased the number of missing birds and elevated the raising rate, the feed conversion rate and PS, compared with the control.

TEST EXAMPLE 3

When the temperature was high in the summer season, layers aged 30 weeks were divided into 3 groups each having 1,000 birds and fed with a common feed for 8 weeks. During this period, the nourishing compositions 7 and 8 obtained in Example 3 and water (as a control) were given to the birds.
After the completion of the test, the normal egg laying rate, the individual egg weight, the daily egg weight (individual egg weight x normal egg laying rate), the feed intake, the feed conversion rate [(feed intake/daily egg weight) x 100] and the soft/broken egg rate were calculated. Also, regarding the egg qualities, the dense albumen height (the height of dense albumen at breaking) and the yolk diameter of each group were measured and thus the Haugt unit (HU) was calculated.
Tables 25 and 26 show the results.

Table 25

|  | Composition 7 | Composition 8 | Control |
|---|---|---|---|
| Normal egg laying rate (%) | 87.8 | 88.8 | 87.3 |
| Individual egg weight (g) | 59.3 | 59.1 | 59.6 |
| Daily egg weight (g) | 52.1 | 52.5 | 52.0 |
| Feed intake (g) | 100.0 | 99.8 | 100.8 |
| Feed conversion rate (%) | 1.92 | 1.90 | 1.94 |
| Soft/broken egg rate (%) | 2.2 | 2.0 | 2.2 |

Table 26

|  | Composition 7 | Composition 8 | Control |
|---|---|---|---|
| Dense albumen height (mm) | 5.58 | 6.28 | 5.52 |
| Yolk diameter (cm) | 4.10 | 4.16 | 4.09 |
| HU | 71.5 | 77.6 | 71.3 |

As the above Tables 25 and 26 show, the nourishing compositions 7 and 8 for animals according to the present invention each elevated the normal egg laying ratio and the daily egg weight and lowered the soft/broken egg ratio, compared with the control. As the results of the examination on the egg qualities, it was found out that the nourishing compositions 7 and 8 of the present invention each elevated the dense albumen height, the yolk diameter and HU.

TEST EXAMPLE 4

Large layer chicks aged 130 days were divided into 4 groups each having 1,000 birds and then transferred in accordance with the working schedule given in Fig. 1. As shown in Fig. 1, the nourishing compositions 9 to 11 for animals obtained in Example 4 and water as a control were administered to the birds with the use of nipple drinkers attached to gauges both in the brooding and egg-laying houses. The feeding was performed for about 12 hours (from the initiation of fasting to bird trapping/packing) in the brooding house and then for about 2 days from the initiation of feeding of water after transferring the chicks into the egg-laying house.

Table 27 shows the body weights before and after the transfer, the body weight loss and the time (days) required for the recovery of the body weight.

Table 27

|  | Composition 9 | Composition 10 | Composition 11 | Control |
|---|---|---|---|---|
| Body weight before transfer (g) | 1304 | 1299 | 1302 | 1300 |
| Body weight after transfer (g) | 1184 | 1199 | 1220 | 1157 |
| Body weight loss (g) | 120 | 100 | 92 | 133 |
| Body weight loss (%) | 9.2 | 7.7 | 7.1 | 10.2 |
| Recovery time (days) | 4 | 3 | 3 | 5 |

As Table 27 shows, the nourishing compositions 9 to 11 for animals according to the present invention each suppressed the body weight loss and shortened the time required for the recovery of the body weight, compared with the control.

TEST EXAMPLE 5

Layers aged 12 months were divided into 4 groups each having 1,000 birds. After fasting for 15 days in order to force the bird to moult, water was also not given for 1 day to stress them. Five to 7 days after the initiation of fasting, small feathers fell out. After 10 to 13 days, feathers in the main wings fell out too. After 2 weeks from the initiation of fasting, feeding was initiated. For 3 weeks following the initiation of feeding, the nourishing compositions 12 to 14 for animals obtained in Example 5 and water (as a control) were given to the birds.

Table 28 shows the time (days) required for starting normal egg-laying again after the initiation of feeding (egg-laying starting day after resumption of feeding), the time (days) required for an egg-laying rate achieving 50% of that before moulting (day achieving 50% egg-laying) and the egg-laying peak (the maximum egg-laying rate) of each group.

Table 28

|  | Composition 12 | Composition 13 | Composition 14 | Control |
|---|---|---|---|---|
| Egg-laying starting day after resumption of feeding (days) | 10 | 10 | 9 | 11 |
| Day achieving 50% egg-laying rate | 31 | 30 | 30 | 33 |
| Egg-laying peak (%) | 83 | 85 | 85 | 82 |

As Table 28 shows, the nourishing compositions 12 to 14 for animals according to the present invention each shortened the time required for starting egg-laying again and the time required for an egg-laying rate achieving 50% of that before moulting and improved the egg-laying peak, compared with the control.

TEST EXAMPLE 6

Mother pigs with the third farrowing were divided into 4 groups each having 5 animals. From 5 to 7 days before farrowing to 3 weeks thereafter, the nourishing compositions 15 to 17 for animals obtained in Example 6 and water (as a control) were given respectively to the groups.

The days with puerperal fever of 41 °C or above, the maximum body temperature, the number of piglings, the number of piglings with diarrhea, the number of weanlings and the average body weight at weaning of each group were measured. Table 29 shows the results.

Table 29

| | Composition 15 | Composition 16 | Composition 17 | Control |
|---|---|---|---|---|
| Days with puerperal fever of 41°C or above | 2 | 0 | 0 | 3 |
| Maximum body temp. (°C) | 41.7 | 40.7 | 40.5 | 42.2 |
| No. of piglings | 53 | 52 | 54 | 54 |
| No. of piglings with diarrhea | 9 | 6 | 4 | 12 |
| No. of weanlings | 47 | 48 | 50 | 47 |
| Average body weight at weaning (kg) | 6.8 | 7.0 | 7.2 | 6.4 |

As Table 29 shows, the nourishing compositions 15 to 17 for animals according to the present invention each improved the days with puerperal fever of 41°C or above, the maximum body temperature, the number of piglings, the number of piglings with diarrhea, the number of weanlings and the average body weight at weaning, compared with the control.

TEST EXAMPLE 7

Piglings farrowed by mother pigs of the third farrowing were divided into 4 groups each having 30 animals. For 40 days starting from 10 days before weaning to 30 days after weaning, the nourishing compositions 18 to 20 for animals obtained in Example 7 and water (as a control) were given respectively to the groups.

The body weight at weaning, the body weight 30 days after weaning, the body weight gain and the average feed intake of each group were measured and the feed conversion rate was calculated. Table 30 shows the results.

Table 23

| | Composition 18 | Composition 19 | Composition 20 | Control |
|---|---|---|---|---|
| Body weight at weaning (kg) | 7.1 | 7.1 | 7.1 | 7.1 |
| Body weight 30 days after weaning (kg) | 25.6 | 26.2 | 26.4 | 24.9 |
| Body weight gain (kg) | 18.5 | 19.1 | 19.3 | 17.8 |
| Average feed intake (kg) | 31.6 | 32.3 | 32.4 | 30.6 |
| Feed conversion rate (%) | 1.71 | 1.69 | 1.68 | 1.72 |

As Table 30 shows, groups fed with the nourishing compositions 18 t0 20 for animals of the present invention showed each a large body weight gain after weaning and a decrease in the feed conversion rate, compared with the control.

TEST EXAMPLE 8

Hogs aged 105 days and weighing 110 kg were divided into 4 groups each having 20 animals and fasted for 24 hours before the shipment. Simultaneously with the initiation of fasting, the nourishing compositions 21 to 23 for animals obtained in the above Example 8 and water (as a control) were given respectively to the groups.

Each animal was weighed before and after the test to determine the average body weight of animals of each group and the body weight loss was calculated. Table 31 shows the results.

Table 31

| | Composition 21 | Composition 22 | Composition 23 | Control |
|---|---|---|---|---|
| Body weight before test (kg) | 110.0 | 110.0 | 110.0 | 110.0 |
| Body weight after test (kg) | 108.6 | 108.8 | 108.0 | 108.2 |
| Body weight loss | 1.4 | 1.2 | 1.0 | 1.8 |
| Body weight loss (%) | 1.3 | 1.1 | 0.9 | 1.6 |

As Table 31 shows, the groups fed with the nourishing compositions 21 to 23 for animals of the present invention showed each a decreased body weight loss, compared with the control.

TEST EXAMPLE 9

The nourishing compositions 24 to 27 for animals obtained in Example 9 were allowed to stand at 40 °C under a humidity of 75 % and the conditions of each solution were observed. Table 32 shows the results.

Table 32

| Time | Composition 24 | Composition 25 | Composition 26 | Composition 27 |
|------|----------------|----------------|----------------|----------------|
| Day 2 | Turning to yellow with forming small masses | Becoming powdery | No change | Turning to yellow with forming large masses |
| Day 5 | Enlarging yellow masses | Becoming coarse | No change | Forming a brown mass as a whole |
| Day 7 | The same as day 5 | The same as day 5 | No change | The same as day 5 |

As Table 32 shows, the nourishing compositions 24, 25 and 27 containing glucose or fructose as a sugar underwent browning. In contrast, the nourishing composition 26 of the present invention containing dextrin as a sugar suffered from no browning even after 7 days.

TEST EXAMPLE 10

Broilers aged 28 days were divided into 3 groups each having 1,000 birds and fed with a common feed for 5 days. During this period, the nourishing compositions 28 and 29 obtained in Example 10 and water (as a control) were given to the birds.
The average body weight and the number of missing dead birds were measured at the initiation of the test (at the age of 28-days) and at the age of 35 and 42 days. Thus the raising rate was calculated in the same manner as in Test Example 2.
Table 33 shows the results.

Table 33

| | Composition 28 | Composition 29 | Control |
|---|---|---|---|
| No. of dead birds | 25 | 20 | 36 |
| Raising rate (%) | 97.5 | 98.0 | 96.4 |
| Body weight at the age of 28 days (g) | 972 | 967 | 982 |
| Body weight at the age of 35 days (g) | 1400 | 1402 | 1394 |
| Body weight at the age of 42 days (g) | 1798 | 1828 | 1768 |
| Body weight gain (g) | 826 | 861 | 786 |
| Daily body weight gain (g) | 59.0 | 61.5 | 56.1 |

As Table 33 shows, the nourishing compositions 28 and 29 for animals according to the present invention each decreased the number of dead birds and elevated the raising rate, compared with the control.

TEST EXAMPLE 11

Healthy new-born chicks hatched from hatchery eggs laid by breeding hens aged 41 weeks and 44 weeks were divided into 3 groups each having 1,000 birds and fed with the nourishing compositions 30 to 31 obtained in Example 11 and water (as a control) were given to the birds for 7 days.
The average body weight and the number of dead birds were measured at the initiation of the test (at the hatch) and at the age of 7 and 14 days. Thus the raising rate was calculated in the same manner as in Test Example 2.
Table 34 shows the results.

Table 34

| | Composition 30 | Composition 31 | Control |
|---|---|---|---|
| No. of dead birds | 10 | 8 | 16 |

Table 34   (continued)

|  | Composition 30 | Composition 31 | Control |
|---|---|---|---|
| Raising rate (%) | 99.0 | 99.2 | 98.4 |
| Body weight at the hatch (g) | 41 | 40 | 42 |
| Body weight at the age of 7 days (g) | 144 | 146 | 142 |
| Body weight at the age of 14 days (g) | 412 | 420 | 404 |
| Body weight gain (g) | 371 | 380 | 362 |
| Daily body weight gain (g) | 28.5 | 29.2 | 27.8 |

As Table 34 shows, the nourishing composition 30 and 31 for animals according to the present invention each decreased the number of dead birds and elevated the raising rate, compared with the control.

TEST EXAMPLE 12

When the temperature was high in the summer season, breeding hens aged 27 weeks were divided into 3 groups each having 1,000 birds and fed with a common feed for 6 weeks. During this period, the nourishing compositions 32 and 33 obtained in Example 12 and water (as a control) were given to the birds.
After the completion of the test, the normal egg laying rate, the individual egg weight, the daily egg weight, the feed intake, the feed conversion rate and the soft/broken egg rate were calculated in the same manner as in Test Example 3.
Tables 35 shows the results.

Table 35

|  | Composition 32 | Composition 33 | Control |
|---|---|---|---|
| Normal egg laying rate (%) | 87.8 | 88.8 | 87.3 |
| Individual egg weight (g) | 59.3 | 59.1 | 59.6 |
| Daily egg weight (g) | 52.1 | 52.5 | 52.0 |
| Feed intake (g) | 100.0 | 99.8 | 100.8 |
| Feed conversion rate (%) | 1.92 | 1.90 | 1.94 |
| Soft/broken egg rate (%) | 2.2 | 2.0 | 2.2 |

As Table 35 shows, the nourishing compositions 32 and 33 for animals according to the present invention each elevated the normal egg laying ratio and the daily egg weight and lowered the soft/broken egg ratio, compared with the control.

TEST EXAMPLE 13

Layers aged 9 weeks were divided into 2 groups each having 1,000 birds and fed with a common feed for 3 days from the day of debeaking. During this period, the nourishing composition 34 obtained in Example 13 and water (as a control) were given to the birds.
The average body weight and the number of dead birds of each group measured at the initiation of the test and at the age of 10, 11 and 12 weeks. Thus the raising rate was calculated in the same manner as in Test Example 2.
Table 36 shows the results.

Table 36

|  | Composition 34 | Control |
|---|---|---|
| No. of dead birds | 7 | 12 |
| Raising rate (%) | 99.3 | 98.8 |
| Body weight at the age of 9 weeks (g) | 694 | 710 |
| Body weight at the age of 10 weeks (g) | 728 | 719 |
| Body weight at the age of 11 weeks (g) | 812 | 771 |
| Body weight at the age of 12 weeks (g) | 919 | 867 |
| Body weight gain (g) | 225 | 157 |

As Table 36 shows, the nourishing composition 34 for animals according to the present invention decreased the number of dead birds and elevated the raising rate, compared with the control.

TEST EXAMPLE 14

Layers aged 16 weeks were divided into 2 groups each having 1,000 birds and infectious coryza vaccine was given to each bird by intramuscular injection in a predetermined dose. For 3 days from the vaccination, the nourishing composition 35 obtained in Example 14 and water (as a control) were given to the birds.
The average body weight and the number of dead birds were measured at the initiation of the test (at the age of 16 weeks) and at the age of 17 and 18 weeks. Thus the raising rate was calculated in the same manner as in Test Example 2.
Table 37 shows the results.

Table 37

|  | Composition 35 | Control |
|---|---|---|
| No. of dead birds | 4 | 6 |
| Raising rate (%) | 99.6 | 99.4 |
| Body weight at the age of 16 weeks (g) | 1215 | 1220 |
| Body weight at the age of 17 weeks (g) | 1240 | 1235 |
| Body weight at the age of 18 weeks (g) | 1320 | 1300 |
| Body weight gain (g) | 105 | 80 |

As Table 37 shows, the nourishing composition 35 for animals according to the present invention decreased the number of dead birds and elevated the raising rate, compared with the control.
The present invention provides a nourishing composition for animals which can improve the nutritional conditions etc. of animals when administered together with drinking water.

**Claims**

1. Use of dextrin having a degree of polymerisation from 5 to 25 and a mixture of amino acids having a particle size of from 1.0 to 500 μm for preparing a nourishing composition which does not undergo aminocarbonylation between sugars and amino acids upon formulation into an aqueous solution, said nourishing composition being useful in prevention of body weight loss and reduction in mortality of animals.

2. The use of claim 1, wherein the animal is layer, broiler or pig.

3. A solid nourishing composition which is obtainable by mixing

    a) dextrin having a degree of polymerisation from 5 to 25, with
    b) a mixture of amino acids having a particle size of from 1.0 to 500 μm; which solid nourishing composition does not undergo aminocarbonylation between sugars and amino acids upon formulation into an aqueous solution.

4. The solid nourishing composition as claimed in claim 3, which comprises lysine, methionine, tryptophan, threonine and glycine.

5. The solid nourishing composition as claimed in claim 3, which comprises lysine having a particle size of from 1.0 to 500 μm, methionine having a particle size of from 1.0 to 200 μm, tryptophan having a particle size of from 1.0 to 200 μm, threonine having a particle size of from 1.0 to 500 μm, or glycine having a particle size of from 1.0 to 500 μm.

6. The solid nourishing composition as claimed in claim 4 or 5, containing additional components selected from dissolution aids, dispersing agents, stabilizers, preservatives, antibiotics, antioxidants, proteinous materials, organic acids, vitamins, minerals, ethyl alcohol, colorants and perfumes.

7. An aqueous nourishing composition for animals which aqueous composition does not undergo aminocarbonylation between sugars and amino acids, and which is obtainable by dissolving a solid nourishing composition of claim 3, 4, 5 or 6 in water or an aqueous solution containing an organic solvent which exerts no undesirable effects on animals.

8. The aqueous nourishing composition as claimed in claim 7, wherein the amount of dextrin ranges from 0.001 to 0.8% by weight.

9. A method of nourishing an animal which method comprises dissolving a solid nourishing composition as defined in claim 3, 4, 5 or 6 in water or an aqueous solution containing an organic solvent which exerts no undesirable effects on animals, and feeding the animal the resulting aqueous composition as a drink.

10. A method of nourishing an animal which method comprises feeding the animal with an aqueous nourishing composition as claimed in claim 7 or 8.


**Patentansprüche**

1. Verwendung von Dextrin mit einem Polymerisationsgrad von 5 bis 25 und einer Mischung von Aminosäuren mit einer Partikelgröße von 1,0 bis 500 µm zur Herstellung einer Futterzusammensetzung, bei welcher nach Formulierung zu einer wässrigen Lösung keine Aminocarbonylierungsreaktion zwischen Zuckern und Aminosäuren abläuft, wobei diese Futterzusammensetzung zur Prävention von Körpergewichtsverlust und zur Verringerung der Mortalität bei Tieren brauchbar ist.

2. Verwendung nach Anspruch 1, worin das Tier ausgewählt ist unter Legehenne, Hähnchen und Schwein.

3. Feste Futterzusammensetzung, welche erhältlich ist durch Vermischen von

   a) Dextrin mit einem Polymerisationsgrad von 5 bis 25 mit
   b) einer Mischung von Aminosäuren mit einer Partikelgröße von 1,0 bis 500 µm,

   wobei bei dieser festen Futterzusammensetzung bei Formulierung zu einer wässrigen Lösung keine Aminocarbonylierungsreaktion zwischen Zuckern und Aminosäuren abläuft.

4. Die feste Futterzusammensetzung nach Anspruch 3, welche Lysin, Methionin, Tryptophan, Threonin und Glyzin umfasst.

5. Feste Futterzusammensetzung nach Anspruch 3, welche Lysin mit einer Partikelgröße von 1,0 bis 500 µm, Methionin mit einer Partikelgröße von 1,0 bis 200 µm, Tryptophan mit einer Partikelgröße von 1,0 bis 200 µm, Threonin mit einer Partikelgröße von 1,0 bis 500 µm oder Glyzin mit einer Partikelgröße von 1,0 bis 500 µm umfasst.

6. Feste Futterzusammensetzung nach Anspruch 4 oder 5, welche zusätzlich Komponenten enthält, die ausgewählt sind unter Lösungshilfsmitteln, Dispergiermitteln, Stabilisatoren, Konservierungsmitteln, Antibiotika, Antioxidantien, proteinartigen Materialien, organischen Säuren, Vitaminen, Mineralien, Ethylalkohol, Farbstoffen und Duftstoffen.

7. Wässrige Tierfutterzusammensetzung, in welcher keine Aminocarbonylierungsreaktion zwischen Zuckern und Aminosäuren abläuft und welche erhältlich ist durch Auflösen einer festen Futterzusammensetzung nach Anspruch 3, 4, 5 oder 6 in Wasser oder einer wässrigen Lösung, welche ein organisches Lösungsmittel enthält, das keine unerwünschten Effekte auf Tiere aufweist.

8. Wässrige Futterzusammensetzung nach Anspruch 7, worin die Dextrinmenge im Bereich von 0,001 bis 0,8 Gew.-% liegt.

9. Tierfütterungsverfahren, welches folgende Schritte umfasst: Auflösen einer festen Futterzusammensetzung gemäß der Definition in einem der Ansprüche 3, 4, 5 oder 6 in Wasser oder einer wässrigen Lösung, welche ein organisches Lösungsmittel enthält, das keine unterwünschten Effekte auf Tiere zeigt, und Fütterung des Tieres mit einem Trank aus der resultierenden wässrigen Zusammensetzung.

**10.** Tierfütterungsverfahren, welches das Füttern des Tiers mit einer wässrigen Futterzusammensetzung nach Anspruch 7 oder 8 umfasst.

**Revendications**

**1.** Utilisation de dextrine ayant un degré de polymérisation de 5 à 25 et d'un mélange d'aminoacides ayant une taille de particules de 1,0 à 500 μm pour la préparation d'une composition nutritive ne subissant pas d'aminocarbonylation entre les sucres et les aminoacides lors de la formulation en une solution aqueuse, ladite composition nutritive étant utile pour prévenir la perte de masse corporelle et pour abaisser la mortalité chez des animaux.

**2.** Utilisation selon la revendication 1, dans laquelle l'animal est une poule pondeuse, un poulet ou un porc.

**3.** Composition nutritive solide pouvant être obtenue par mélange

    a) d'une dextrine ayant un degré de polymérisation de 5 à 25, avec
    b) un mélange d'aminoacides ayant une taille de particules de 1,0 à 500 μm;

    cette composition nutritive solide ne subissant pas d'aminocarbonylation entre les sucres et les aminoacides lors de la formulation en une solution aqueuse.

**4.** Composition nutritive solide selon la revendication 3, qui comprend de la lysine, de la méthionine, du tryptophane, de la thréonine et de la glycine.

**5.** Composition nutritive solide selon la revendication 3, qui comprend de la lysine ayant une taille de particules de 1,0 à 500 μm, de la méthionine ayant une taille de particules de 1,0 à 200 μm, du tryptophane ayant une taille de particules de 1,0 à 200 μm, de la thréonine ayant une taille de particules de 1,0 à 500 μm ou de la glycine ayant une taille de particules de 1,0 à 500 μm.

**6.** Composition nutritive solide selon la revendication 4 ou 5, contenant des constituants supplémentaires choisis parmi des auxiliaires de dissolution, des agents dispersants, des stabilisants, des conservateurs, des antibiotiques, des antioxydants, des produits protéiniques, des acides organiques, des vitamines, des sels minéraux, de l'éthanol, des colorants et des parfums.

**7.** Composition nutritive aqueuse pour animaux, cette composition aqueuse ne subissant pas d'aminocarbonylation entre les sucres et les aminoacides, et pouvant être obtenue par dissolution d'une composition nutritive solide selon la revendication 3, 4, 5 ou 6 dans de l'eau ou dans une solution aqueuse contenant un solvant organique qui n'exerce pas d'effets indésirables sur les animaux.

**8.** Composition nutritive aqueuse selon la revendication 7, dans laquelle la quantité de dextrine est comprise entre 0,001 et 0,8 % en masse.

**9.** Procédé d'alimentation d'un animal, selon lequel on dissout une composition nutritive solide selon la revendication 3, 4, 5 ou 6 dans de l'eau ou dans une solution aqueuse contenant un solvant organique qui n'exerce pas d'effets indésirables sur les animaux, et on donne la composition aqueuse obtenue à boire à l'animal.

**10.** Procédé d'alimentation d'un animal, selon lequel on alimente l'animal avec une composition nutritive aqueuse selon la revendication 7 ou 8.

Fig. 1

—————Brooding house————— ——————Egg laying house——————

12:00 - 13:00   1:00 - 2:00   6:00          9:00

                                                    12:00 - 1300    15:00

fasting/water        packing        transfer

                                            packing        water        water
                                            water                       half/feeding

                                            water 37 - 38 hours

| water
12 hours .                                          10:00